# EUROPÄISCHE PATENTSCHRIFT

(11) **EP 0 473 044 B1**
(45) Veröffentlichungstag und Bekanntmachung des Hinweises auf die Patenterteilung: **23.11.1994**
(21) Anmeldenummer: 91113926.9
(22) Anmeldetag: 20.08.1991
(51) Int. Cl.: B65G 47/91, B25J 15/06

(54) **Sauggreifvorrichtung**
Vacuum gripper device
Dispositif pour saisir par aspiration

(30) Priorität: 30.08.1990 DE 4027492
(43) Veröffentlichungstag der Anmeldung: 04.03.1992
(73) Patentinhaber: MATZA + WEIDNER GmbH, D-86179 Augsburg (DE)
(72) Erfinder: Neider, Reinhold, Dipl.-Ing., D-86316 Friedberg (DE)
(74) Vertreter: Gauger, Hans-Peter, Dipl.-Ing.

(56) Entgegenhaltungen:
- EP-A- 0 302 221
- EP-A- 0 379 257
- DE-A- 1 960 106
- DE-A- 3 810 989
- DE-A- 3 923 672
- FR-A- 2 642 055

## Beschreibung

Die Erfindung bezieht sich auf eine Sauggreifvorrichtung zum Anheben und Halten von Werkstücken gemäß der durch den Oberbegriff des Patentanspruches 1 angegebenen Gattung.

Bei einer aus der DE-A-39 23 672 bekannten Sauggreifvorrichtung dieser Art ist die Ventilkammer des Sicherheitsventils mit einem etwa rohrförmigen Anschlußstück der Saugluftleitung ausgebildet. Der gummielastische Saugnapf wird an diesem Anschlußstück durch eine Einsatzhülse gehalten, die mit dem Ventilsitz für ein kugelförmig ausgebildetes Ventilstück des Sicherheitsventils versehen ist. Das Ventilstück ist durch die Ventilfeder an dem Anschlußstück abgestützt und entgegen dem über die Saugluftleitung an die Ventilkammer angelieferten Saugdruck in seine Schließstellung vorgespannt. Mit der Einsatzhülse ist der Leckluftanschluß als eine die Ventilkammer des Sichersheitsventils mit dem Saugraum des Saugnapfes verbindende Anschlußbohrung ausgebildet. Die Ventilkammer ist daneben noch über eine zweite Anschlußbohrung des Anschlußstückes an einen umlaufenden Ringspalt angeschlossen, der an der Außenseite des Saugnapfes mit einem durch das Anschlußstück konzentrisch befestigten Stützkörper ausgebildet ist und analog dem Leckluftanschluß der Ventilkammer eine offene Verbindung mit der Umgebungsluft aufweist. Diese offene Verbindung wird erst beim Aufsetzen des Saugnapfes auf die Oberfläche eines Werkstückes geschlossen, sobald bei diesem Aufsetzen der Saugnapf an einer umlaufenden Dichtungsleiste des Ringspaltes dicht gegen den Stützkörper angelegt ist.

Bei der bekannten Sauggreifvorrichtung sind somit die beiden Anschlußbohrungen der Ventilkammer des Sicherheitsventils bestimmend für die Größe des Saugdruckverlustes, der beim Aufsetzen des Saugnapfes auf die Oberfläche eines Werkstückes bis zum Erreichen des Öffnungs-Schaltdruckes für das Ventilstück des Sicherheitsventils erhalten wird. Für die mit der Saugluftleitung verbundene Vakuumpumpe wird daher wenigstens eine Durchsatzleistung benötigt, welche diesen im wesentlichen durch die Dimensionierung der beiden Anschlußbohrungen der Ventilkammer des Sicherheitsventils bestimmten Saugdruckverlust während der anfänglichen Greifphase des Saugnapfes ausgleicht, wenn für die Sauggreifvorrichtung eine relativ kurze Reaktionszeit und gleichzeitig auch eine hohe Betriebssicherheit für ein damit bezwecktes Anheben und Halten von Werkstücken vorgegeben wird. Um für das Erreichen des Öffnungs-Schaltdruckes während dieser anfänglichen Greifphase keine unnötige Verzögerung zu erhalten, darf dabei jedoch die Ventilfeder nur eine relativ schwache Stellkraft für das kugelförmige Ventilstück des Sicherheitsventils aufweisen. Bei einer schwachen Stellkraft der Ventilfeder ergibt sich aber an dem Ventilsitz für das Ventilstück eine entsprechend abgeschwächte Abdichtwirkung, wodurch die insbesondere während der anfänglichen Greifphase vorhandene Gefahr für ein Ansaugen von Schmutz in die Saugluftleitung und damit in die angeschlossene Vakuumpumpe entsprechend vergrößert wird.

Aus der DE-OS 19 60 106 ist eine Sauggreifvorrichtung bekannt, bei welcher ein ebenfalls integriertes Sicherheitsventil des Saugnapfes ein scheibenförmiges Ventilstück aufweist. Das Ventilstück ist dabei durch eine Zugfeder entgegen dem über eine angeschlossene Saugluftleitung angelieferten Saugdruck vorgespannt und weist einen mit Durchtrittsöffnungen ausgebildeten Leckluftanschluß auf, über welchen der vor der Anschlußmündung der Saugluftleitung im Zusammenwirken mit der einen Seite des Ventilstückes ausgebildete Bereich der Ventilkammer eine Verbindung mit dem Saugraum des Saugnapfes erhält. Mit der Anschlußmündung der Saugluftleitung ist ein Ventilsitz für das Ventilstück ausgebildet, mit welchem die Saugluftleitung gegen den Saugraum abgesperrt wird, sobald beim Aufsetzen des Saugnapfes auf die Oberfläche eines Werkstückes Fremdluft in den Saugraum als Folge eines vorhandenen Defekts eintreten sollte. Alternativ zu der scheibenförmigen Ausbildung ist für das Ventilstück des Sicherheitsventils auch eine kugelförmige Ausbildung vorgesehen, wobei dann die Ventilkammer Führungsschalen aufweist, um eine axiale Führung für das dabei durch eine Druckfeder entgegen dem Saugdruck vorgespannte Ventilstück zu erhalten. Mit den Führungsschalen ist gleichzeitig ein Leckluftanschluß der Ventilkammer an dem Saugraum des Saugnapfes ausgebildet.

Die durch die Patentansprüche gekennzeichnete Erfindung löst die **Aufgabe,** eine Sauggreifvorrichtung der angegebenen Gattung derart auszubilden, daß für die Vakuumpumpe ein mit dem Leckluftanschluß der Ventilkammer des Sicherheitsventils relativ eng begrenzbarer Saugdruckverlust erhalten wird und die anfängliche Greifphase der Sauggreifvorrichtung mit einer relativ kurzen Reaktionszeit in Bezug auf die Einstellung des Öffnungs-Schaltdruckes für das Ventilstück des Sicherheitsventils durchführbar ist.

Die mit der erfindungsgemäßen Sauggreifvorrichtung erzielbaren Vorteile ergeben sich im wesentlichen dadurch, daß zunächst wegen der jetzt mit dem Saugdruck gleichsinnigen Druckbeaufschlagung des Ventilstückes durch die Ventilfeder des Sicherheitsventils an dem für das Ventilstück an der Anschlußmündung der Saugluftleitung ausgebildeten Ventilsitz eine mit der Stellkraft der Ventilfeder unmittelbar beeinflußte Abdichtung erhalten wird, die jedes Vordringen von Schmutz in die über die Saugluftleitung angeschlossene Vakuumpumpe allein auf die über den Leckluftanschluß bestehende Verbindung beschränkt. Die mit der Ventilfeder auf das Ventilstück des Sicherheitsventils ausgeübte Stellkraft kann dabei andererseits für eine sehr feinfühlige Abstimmung des Öffnungs-Schaltdruckes für das Ventilstück des Sicherheitsventils ausgelegt werden, weil wegen der Ausbildung der Ventilkammer mit dem Faltenbalg jetzt der von außen auf den Faltenbalg einwirkende Umgebungsdruck zur Verstärkung des Saugdruckes genutzt wird, der sich nach dem Aufsetzen des Saugnapfes auf die Oberfläche eines Werkstückes unter Vermittlung des Leckluftanschlusses in der Ventilkammer einstellt. Wegen dieser mit dem Umgebungsdruck respektive mit der damit beaufschlagten Druckfläche des Faltenbalges erreichten Verstärkung des Saugdruckes beim Erreichen des mit der Stellkraft der Ventilfeder vorgegebenen Grenzwertes wird auch eine sehr kurze Reaktionszeit für die Sauggreifvorrichtung während der anfänglichen Greifphase erhalten. Weil sich bei der erfindungsgemäßen Sauggreifvorrichtung nach dem Aufsetzen des Saugnapfes auf die Oberfläche eines Werkstückes der Öffnungs-Schaltdruck für das Ventilstück des Sicherheitsventils in der Ventilkammer ohne jede nachteilige Verzögerung einstellt, wird damit für die Sauggreifvorrichtung auch eine entsprechend hohe Betriebssicherheit erhalten.

Ein Ausführungsbeispiel der erfindungsgemäßen Sauggreifvorrichtung ist in der Zeichnung schematisch dargestellt und wird nachfolgend näher erläutert. Es zeigt
- Fig. 1: eine halbseitig geschnittene Ansicht der Sauggreifvorrichtung, wobei das integrierte Sicherheitsventil des Saugnapfes in der Schließstellung gezeigt ist,
- Fig. 2: eine der Fig. 1 entsprechende Ansicht der Saugvorrichtung, wobei das Sicherheitsventil in der beim Aufsetzen des Saugnapfes auf die Oberfläche eines Werkstückes erhaltenen Öffnungsstellung gezeigt ist,
- Fig. 3: eine halbseitig geschnittene Ansicht der Saugvorrichtung in Übereinstimmung mit der Darstellung gemäß Fig. 1, jedoch vervollständigt mit einem in der Saugluftleitung angeordneten zweiten Sicherheitsventil; und

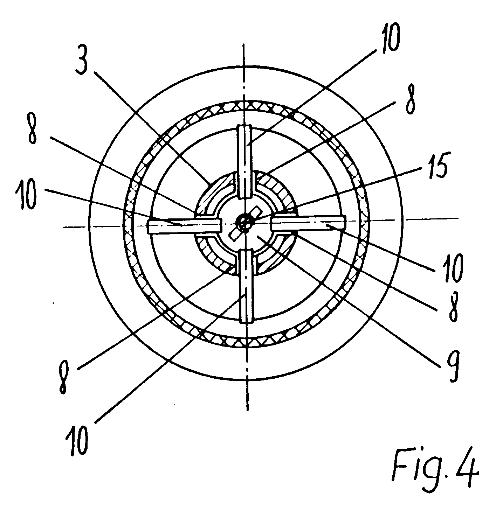

- Fig. 4: eine Schnittansicht der Sauggreifvorrichtung nach der Linie IV-IV in Fig. 1.

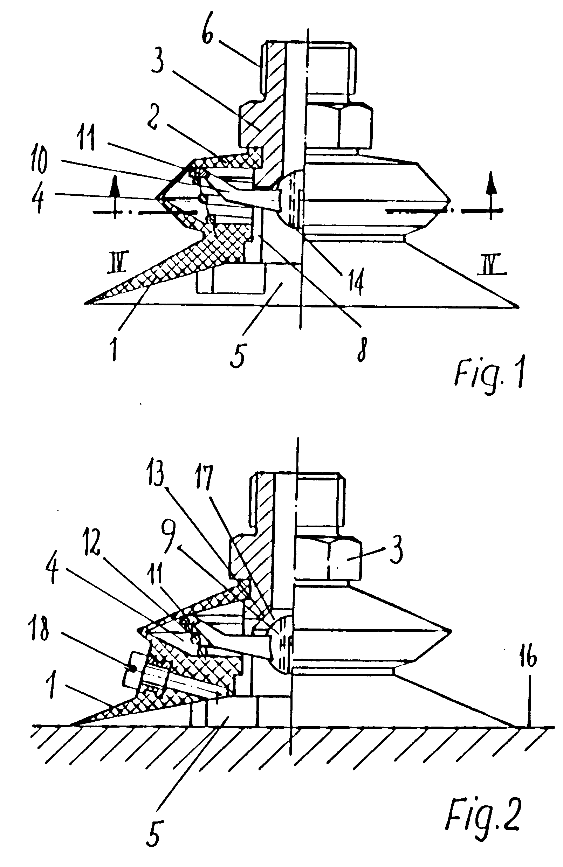

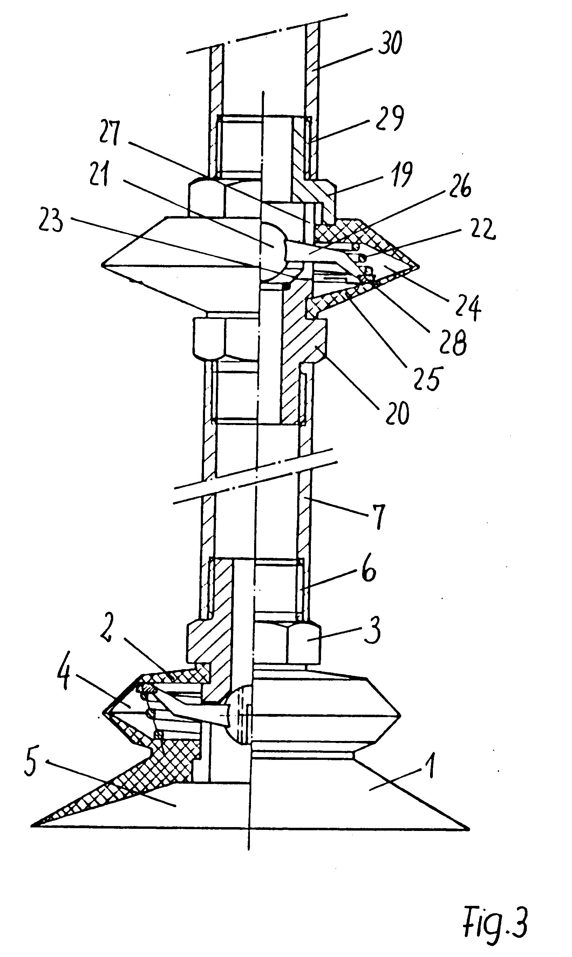

Die in Fig. 1 gezeigte Sauggreifvorrichtung ist mit einem gummielastischen Saugnapf 1 gebildet, der gemeinsam mit einem Faltenbalg 2 an einem Anschlußstück 3 einer mit einer Vakuumpumpe verbundenen Saugluftleitung angeordnet ist. Mit dem Faltenbalg 2, der eine mit dem Saugnapf 1 einstückige Ausbildung aufweist, ist eine Ventilkammer 4 für ein integriertes Sicherheitsventil des Saugnapfes ausgebildet, mit dessen Saugraum 5 diese Ventilkammer über das im wesentlichen rohrförmig ausgebildete Anschlußstück 3 verbunden ist. Das Anschlußstück 3 ist mit einem Außengewinde 6 versehen, mit welchem beispielsweise das Anschlußgewinde eines Rohrstückes 7 (Fig. 3) verschraubt werden kann, über das der weitere Anschluß mit der Vakuumpumpe hergestellt wird.

Die offene Verbindung zwischen der Ventilkammer 4 des Sicherheitsventils und dem Saugraum 5 des Saugnapfes 1 wird über vier achsparallele Führungsschlitze 8 des Anschlußstückes 3 erhalten, mit welchen ein im wesentlichen kugelförmig ausgebildetes Ventilstück 9 des Sicherheitsventils mittels radialer Führungsarme 10 axial geführt wird. Die Führungsarme 10 sind an ihren in die Ventilkammer 4 vorstehenden Enden über einen Druckring 11 verbunden, an welchem eine durch den Saugnapf 1 abgestützte Ventilfeder 12 angreift. Die Stellkraft der Ventilfeder ist so bemessen, daß in der Schließstellung des Ventilstückes 9 bezüglich eines mit dem Anschlußstück 3 ausgebildeten Ventilsitzes 13 eine Berührungsstellung des Druckringes 11 mit dem Faltenbalg erhalten wird. Weil auf die Außenseite des Faltenbalgs 2 der Umgebungsdruck einwirkt, ist damit der Faltenbalg durch die Stellkraft der Ventilfeder 12 entgegen diesem Umgebungsdruck vorgespannt. In der Schließstellung des Ventilstückes 9 ergibt die über die Führungsarme 10 übersetzte Stellkraft der Ventilfeder 12 eine mit dem Saugdruck gleichsinnige Ausrichtung der Druckbeaufschlagung des Ventilstückes 9, sobald der Saugdruck über die an dem Anschlußstück 3 angeschlossene Saugluftleitung angeliefert wird. Zwischen der Saugluftleitung und dem Saugraum 5 des Saugnapfes besteht dann eine Verbindung über einen mit dem Ventilstück 9 ausgebildeten Leckluftanschluß 14, der beispielsweise mit einer in einer Axialbohrung des Ventilstückes verstellbar eingesetzten Drosselschraube 15 ausgebildet sein kann.

Wenn die Sauggreifvorrichtung gemäß der Darstellung in Fig. 2 zum Anheben und Halten eines Werkstückes mit dem Saugnapf 1 auf die Oberfläche 16 des Werkstückes aufgesetzt wird, dann wird dadurch der Saugraum 5 des Saugnapfes 1 gegen den Umgebungsdruck abgesperrt. Der über das Anschlußstück 3 der angeschlossenen Saugluftleitung angelieferte, durch die Vakuumpumpe erzeugte Saugdruck kann sich dann über den Leckluftanschluß 14 zur Entlüftung des Saugraumes 5 auswirken, wobei auch eine Füllung der Ventilkammer 4 mit dem Saugdruck stattfindet und somit für die Ventilkammer der Schaltdruck gesteuert wird, unter welchem das Ventilstück 9 geöffnet wird. In Fig. 2 ist die Öffnungsstellung des Ventilstückes gezeigt, in welcher somit an dem mit dem Anschlußstück 3 ausgebildeten Ventilsitz 13 ein umlaufender Ringspalt 17 besteht, über welchen der Saugdruck dann voll zu dem Saugraum 5 des Saugnapfes 1 durchgeschaltet ist und damit dessen Haltekraft bezüglich der Oberfläche 16 des Werkstückes sicherstellt. Diese Haltekraft kann umgekehrt dadurch wieder gelöst werden, daß beispielsweise über einen Druckstoßanschluß 18 des Saugnapfes 1 in den Saugraum 5 ein Überdruck zugeleitet wird, der dann zu einem Schließen des Sicherheitsventils führt und den Saugnapf von der Oberfläche 16 des Werkstückes löst.

In Fig. 3 ist noch gezeigt, daß die vorbeschriebene Sauggreifvorrichtung mit dem integrierten Sicherheitsventil des Saugnapfes 1 über das eine Zwischenlänge der Saugluftleitung ergebende Rohrstück 7 mit einem zweiten Sicherheitsventil kombiniert sein kann, welches mit einer Anordnung an einem zweiteilig ausgebildeten Zwischenstück 19, 20 ein im wesentlichen kugelförmig ausgebildetes zweites Ventilstück 21 aufweist. Das zweite Ventilstück 21 ist durch eine zweite Ventilfeder 22 in eine Schließstellung bezüglich eines mit dem einen Teil 20 des Zwischenstückes ausgebildeten Ventilsitz 23 vorgespannt. Die Ventilkammer 24 dieses zweiten Sicherheitsventils ist mit einem zweiten Faltenbalg 25 ausgebildet, der durch die zweite Ventilfeder 22 entgegen dem von außen einwirkenden Umgebungsdruck vorgespannt ist. Das Ventilstück 21 ist über radiale Führungsarme 26 in achsparallelen Führungsschlitzen 27 des einen Teils 20 des Zwischenstückes 19, 20 axial geführt, wobei die in die zweite Ventilkammer 24 vorstehenden Enden der Führungsarme wieder über einen Druckring 28 verbunden sind, an welchem durch die zweite Ventilfeder 22 eine Berührungsstellung mit dem Faltenbalg 25 erhalten wird.

Weil das zweite Ventilstück 21 abweichend von dem Ventilstück 9 des integrierten Sicherheitsventils des Saugnapfes 1 durch die zweite Ventilfeder 22 entgegen dem Saugdruck vorgespannt ist, der über ein mit einem Außengewinde 29 des Zwischenstücks 19, 20 verschraubtes zweites Rohrstück 30 bei eingeschalteter Vakuumpumpe angeliefert wird, ist damit für eine bei der Anlieferung des Saugdruckes beispielsweise durch einen Ausfall der Vakuumpumpe auftretende Störung sichergestellt, daß das zweite Ventilstück 21 durch die zweite Ventilfeder 22 in die Schließstellung an dem Ventilsitz 23 gedrückt wird. Wegen des Fehlens auch eines Leckluftanschlusses in der Umgebung des zweiten Ventilstückes 21 ist folglich durch das Rohrstück 7 für das integrierte Sicherheitsventil des Saugnapfes 1 ein Saugdruckspeicher bereitgestellt, der die Haltekraft des Saugnapfes über eine vorbestimmte Zeitdauer aufrecht erhalten läßt Das mit dem Saugnapf zum Zeitpunkt des Ausfalls der Vakuumpumpe noch angehobene und gehaltene Werkstück kann daher sicher abgelegt werden, wobei es für die Erkennbarkeit eines solchen Notfalles noch zweckmäßig erscheinen kann, zur Ermöglichung einer Fernabfrage des Schaltzustandes wenigstens des zweiten Sicherheitsventils beispielsweise einen mit einer Überwachungseinrichtung gekoppelten Schaltstift an dem Ventilstück 21 vorzusehen.

Wenn bei dem integrierten Sicherheitsventil des Saugnapfes 1 auf eine einstückige Ausbildung des Faltenbalges 2 verzichtet wird, dann kann mit dem Faltenbalg 25 des zweiten Sicherheitsventils auch dessen Ventilkammer 4 ausgebildet werden. Das Anschlußstück 3 muß dann eine etwa an das Zwischenstück 19, 20 angepaßte zweiteilige Ausbildung erhalten, um den dann also separaten Saugnapf 1 gemeinsam mit dem Faltenbalg 2 halten zu können. Eine separate Ausbildung des Faltenbalgs 2 ergibt die Möglichkeit, mit unterschiedlichen Abmessungen entsprechend unterschiedliche Ansprechempfindlichkeiten für das integrierte Sicherheitsventil des Saugnapfes bereitzustellen.

## Patentansprüche

1. Sauggreifvorrichtung zum Anheben und Halten von Werkstücken, insbesondere von flächigen Stückgütern mit einem gummielastischen Saugnapf (1), dessen Saugraum (5) über ein Sicherheitsventil mit einem durch eine Ventilfeder (12) in eine Schließstellung an einem Ventilsitz (13) vorgespannten Ventilstück (9) an eine mit einer Vakuumpumpe verbunde Saugluftleitung angeschlossen ist, wobei in dem Saugraum (5) des Saugnapfes (1) ein Leckluftanschluß (14) der die Ventilfeder (12) aufnehmenden, über den Leckluftanschluß (14) mit dem Saugraum (5) verbundenen Ventilkammer (4) des Sicherheitsventils mündet, über welchen beim Aufsetzen des Saugnapfes (1) auf die Oberfläch (16) eines Werkstückes der von dem Umgebungsdruck beeinflußte Öffnungs-Schaltdruck für das Ventilstück (9) des Sicherheitsventils innerhalb seiner Ventilkamme (4) gesteuert wird,
dadurch **gekennzeichnet,** daß Ventilkammer (4) des Sicherheitsventils mit einem Faltenbalg (2) ausgebildet ist, der in der Schließstellung des Ventilstückes (9) entgegen dem auf den Faltenbalg (2) von außen einwirkenden Umgebungsdruck durch die mit dem Ventilstück (9) gemeinsame Ventilfeder (12) vorgespannt wird, wobei der Ventilsitz (13) für das Ventilstück (9) eine Ausbildung an der Anschlußmündung der Saugluftleitung an die Ventilkammer (4) für eine mit der Ventilfeder (12) gleichsinnige Druckbeaufschlagung des Ventilstückes (9) mit dem über die Saugluftleitung angelieferten Saugdruck aufweist.

2. Sauggreifvorrichtung nach Anspruch 1,
dadurch **gekennzeichnet,** daß der Faltenbalg (2) an einem mit dem Saugnapf (1) gemeinsamen rohrförmigen Anschlußstück (3) der Saugluftleitung angeordnet ist, welches den Saugraum (5) des Saugnapfes (1) mit der Ventilkammer (4) des Sicherheitsventils verbindet und den Ventilsitz (13) für das Ventilstück (9) aufweist.

3. Sauggreifvorrichtung nach Anspruch 2,
dadurch **gekennzeichnet,** daß das Ventilstück (9) im wesentlichen kugelförmig ausgebildet und mit wenigstens einem radialen Führungsarm (10) in einer achsparallelen Schlitzführung (8) des Anschlußstückes (3) geführt ist, wobei der Führungsarm (10) in der Schließstellung des Ventilstückes (9) durch die Ventilfeder (12) in eine Berührungsstellung mit dem Faltenbalg (2) vorgespannt ist.

4. Sauggreifvorrichtung nach einem der Ansprüche 1 bis 3,
dadurch **gekennzeichnet,** daß die Ventilfeder (12) an dem Saugnapf (1) abgestützt ist.

5. Sauggreifvorrichtung nach einem der Ansprüche 1 bis 4,
dadurch **gekennzeichnet,** daß der Faltenbalg (12) eine mit dem Saugnapf (1) einstückige Ausbildung aufweist.

6. Sauggreifvorrichtung nach einem der Ansprüche 1 bis 5,
dadurch **gekennzeichnet,** daß der Leckluftanschluß (14) mit einer in eine Anschlußbohrung an den Saugraum (5) des Saugnapfes (1) verstellbar eingesetzten Drosselschraube (15) ausgebildet ist.

7. Sauggreifvorrichtung nach einem der Ansprüche 1 bis 6,
dadurch **gekennzeichnet,** daß der Leckluftanschluß (14) mit dem Ventilstück (9) ausgebildet ist.

8. Sauggreifvorrichtung nach einem der Ansprüche 1 bis 7,
dadurch **gekennzeichnet,** daß in der Saugluftleitung ein zu dem Sicherheitsventil des Saugnapfes (1) über eine Zwischenlänge (7) der Saugluftleitung beabstandetes zweites Sicherheitsventil angeordnet ist, welches ein zweites Ventilstück (21) aufweist, das zur Ausbildung der Zwischenlänge (7) der Saugluftleitung als ein bezüglich des Saugraumes (5) des Saugnapfes (1) wirksamer Saugdruckspeicher durch eine zweite Ventilfeder (22) entgegen dem über die Saugluftleitung angelieferten Saugdruck in eine Schließstellung an einem zweiten Ventilsitz (23) vorgespannt ist.

9. Sauggreifvorrichtung nach Anspruch 8,
dadurch **gekennzeichnet,** daß die zweite Ventilfeder (22) eine Anordnung innerhalb einer mit einem zweiten Faltenbalg (25) ausgebildeten zweiten Ventilkammer (24) des zweiten Sicherheitsventils aufweist und für eine mit dem zweiten Ventilstück (21) gemeinsame Vorspannung des zweiten Faltenbalgs (25) entgegen dem von außen einwirkenden Umgebungsdruck angeordnet ist.

10. Sauggreifvorrichtung nach Anspruch 9,
dadurch **gekennzeichnet,** daß der zweite Faltenbalg (25) an einem rohrförmigen Zwischenstück (7) der Saugluftleitung angeordnet ist, welches den zweiten Ventilsitz (23) aufweist und mit einem achsparallelen Führungsschlitz (27) für einen radialen Führungsarm (26) des im wesentlichen kugelförmig ausgebildeten zweiten Ventilstückes (21) versehen ist, wobei der Führungsarm (26) in der Schließstellung des zweiten Ventilstückes (21) durch die zweite Ventilfeder (22) in eine Berührungsstellung mit dem zweiten Faltenbalg (25) vorgespannt ist.

## Claims

1. Suction gripper apparatus for lifting and holding workpieces, in particular isolated planar part, comprising a rubber-elastic suction cup (1) whose suction chamber (5) is connected by means of a safety valve to a valve element (9) which is biased, by means of a valve spring (12), into a closing position at a valve seat (13), at a suction air line which is connected to a vacuum pump, in which apparatus an inleakage connector (14) of the valve chamber (4) of said safety valve opens into said suction chamber (5) of said suction cup (1), with this chamber accommodating said valve spring (12) and being connected via said inleakage connector (14) to said suction chamber (5), by means of which connector a closure-switching pressure for said valve element (9) of said safety valve is controlled, within its valve chamber (4), when said suction cup (1) is placed into the surface (16) of a workpiece, with this pressure being influenced by the environmental pressure,
**characterized** in that said valve chamber (4) of said safety valve is designed to include bellows (2) which, with said valve element (9) being in its the closing position, are biased, in opposition to the environmental pressure applied from the outside into said bellows (2), by means of said valve spring (12) jointly with said valve element (9), wherein said valve seat (13) comprises a formation at the orifice connecting said suction air line to said valve chamber (4), for said valve element (9) so as to achieve a pressurization of said valve element (9), in the same direction as that of said valve spring (12), by means of the suction pressure supplied by said suction air line.

2. Suction gripper apparatus according to Claim 1,
**characterized** in that said bellows (2) are provided at a connector element (3) of said suction air line in common with said suction cup (1), which connector element communicates said suction chamber (5) of said suction cup (1) with said valve chamber (4) of said safety valve and comprises said valve seat (13) for said valve element (9).

3. Suction gripper apparatus according to Claim 2,
**characterized** in that said valve element (9) is designed to have a substantially spherical shape and is guided by means of a radial guiding arm (10) in a paraxial slot-type guide (8) of said connector element (3), wherein said guiding arm (10), with said valve element (9) being in its closing position, is biased by means of said valve spring (12) into a position for contacting said bellows (2).

4. Suction gripper apparatus according to any of Claims 1 to 3,
**characterized** in that said valve spring (12) supported at said suction cup (1).

5. Suction gripper apparatus according to any of Claims 1 to 4,
**characterized** in that said bellows (12) are formed to be integral with said suction cup (1).

6. Suction gripper apparatus according to any of Claims 1 to 5,
**characterized** in that said inleakage connector (14) is provided with a restrictor screw (15) adjustably inserted into a bore for connection to said suction chamber (5) of said suction cup (1).

7. Suction gripper apparatus according to any of Claims 1 to 6,
**characterized** in that said inleakage connector (14) is designed to comprise said valve element (9).

8. Suction gripper apparatus according to any of Claims 1 to 7,
**characterized** in that a second safety valve is disposed in said suction air line, which is spaced over an intermediate length of said suction air line relative to said safety valve of said suction cup (1), which second valve comprises a second valve element (21) which is biased into a closing position at a second valve seat (23) so as to constitute said intermediate length of the suction air line in the form of a suction pressure buffer effective relative to said suction chamber of said suction cup via a second valve spring (22) in opposition to the suction pressure supplied by the suction air line.

9. Suction gripper apparatus according to Claim 8,
**characterized** in that said second valve spring (22) comprises a system within a second valve chamber (24) of said second safety valve, which is constituted by second bellows (25) and is provided for being biased jointly with said second valve element (21) of said second bellows (25) in opposition to the environmental pressure applied from the outside.

10. Suction gripper apparatus according to Claim 9,
**characterized** in that said second bellows (25) are disposed at a tubular adapter (7) of the suction air line, which bellows comprise said second valve seat (23) and are provided with a paraxial guiding slot (27) for a radial guiding arm (26) of said second valve element (21) of a substantially spherical shape, wherein said guiding arm (26), with said second valve element (21) being in its closing position, is biased by means of said second valve spring (22) into a position contacting said second bellows (25).

## Revendications

1. Dispositif preneur à aspiration à lever et tenir des pièces à travailler, en particulier des charges isolées en nappe, comprenant une ventouse (1) élastique de façon de caoutchouc, dont la chambre d'aspiration (5) est reliée, moyennant une soupape de sûreté à un élément de soupape (9) précontraint par un ressort de soupape (12) dans une position de fermeture à une siège de soupape (13), à une conduite d'air en dépression qui est raccordée à une pompe dépresseur, dans lequel dispositif un raccord d'air de fuite (14) de la chambre de soupape (4) de ladite soupape de sûreté débouche dans ladite chambre d'aspiration (5) de ladite ventouse (1), cette chambre recevant ledit ressort de soupape (12) et étant raccordée via ledit raccord d'air de fuite (14) à ladite chambre d'aspiration (5), moyennant duquel raccord la pression de manoevre en fermeture pour ledit élément de soupape (9) de ladite soupape de sûreté est commandée, au dedans de sa chambre de soupape (4), quand ladite ventouse (1) est placée sur la surface (16) d'une pièce à travailler, cette pression étant soumise à l'influence par la pression d'environnement,
**caractérisé** en ce que ladite chambre de soupape (4) de ladite soupape de sûreté est conçue à un soufflet (2) qui, à la position de fermeture dudit élément de soupape (9), est précontraint en sens inverse à la pression d'environnement, qui agit sur ledit soufflet (2) de l'extérieur, moyennant ledit ressort de soupape (12) en commun avec ledit élément de soupape (9), ladite siège de soupape (13) comprenant une formation à la bouche de raccord de ladite conduite d'air en dépression à ladite chambre de soupape (4), pour ledit élément de soupape (9) afin d'achever une sollicitation en pression dudit élément de soupape (9), au même sens que la compression dudit ressort de soupape (12), par la pression d'aspiration alimentée par ladite d'air en dépression.

2. Dispositif preneur à aspiration selon la revendication 1,
**caractérisé** en ce que ledit soufflet (2) est disposé à un élément de raccord (3) de ladite conduite d'air en dépression, qui est en commun avec ladite ventouse (1), lequel élément de raccord met ladite chambre d'aspiration (5) de ladite ventouse (1) en communication avec ladite chambre de soupape (4) de ladite soupape de sûreté et comprend ladite siège de soupape (13) pour ledit élément de soupape (9).

3. Dispositif preneur à aspiration selon la revendication 2,
**caractérisé** en ce que ledit élément de soupape (9) est conçu essentiellement à forme sphérique et est guidé, moyennant au moins un bras de guidage (10) radial, dans un guide à mortaise (8) parallèle à l'axe, dudit élément de raccord (3), ledit bras de guidage (10), à la position de fermeture dudit élément de soupape (9), étant précontraint par ledit ressort de soupape (12) dans une position en contact avec ledit soufflet (2).

4. Dispositif preneur à aspiration selon une quelconque des revendications 1 à 3,
**caractérisé** en ce que ledit ressort de soupape (12) s'appuie à ladite ventouse (1).

5. Dispositif preneur à aspiration selon une quelconque des revendications 1 à 4,
**caractérisé** en ce que ledit soufflet (12) est formé d'être intégral de ladite ventouse (1).

6. Dispositif preneur à aspiration selon une quelconque des revendications 1 à 5,
**caractérisé** en ce que ledit raccord d'air de fuite (14) est conçu à une vis d'étranglement (15) insérée, de façon ajustable, dans un alésage de raccord à ladite chambre d'aspiration (5) de ladite ventouse (1).

7. Dispositif preneur à aspiration selon une quelconque des revendications 1 à 6,
**caractérisé** en ce que ledit raccord d'air de fuite (14) est conçu à présenter ledit élément de soupape (9).

8. Dispositif preneur à aspiration selon une quelconque des revendications 1 à 7,
**caractérisé** en ce qu'une deuxième soupape de sûreté est disposée dans ladite conduite d'air en dépression, qui est espacée, sur une longueur intermédiaire de ladite conduite d'air en dépression, de ladite soupape de sûreté de ladite ventouse (1), laquelle deuxième soupape comprend un deuxième élément de soupape (21) qui est précontrainte, à former ladite longueur intermédiaire de la conduite d'air en dépression, sous forme d'un tampon de pression d'aspiration efficace relativement à ladite chambre d'aspiration de ladite ventouse via un deuxième ressort de soupape (22), en sens inverse à la pression d'aspiration alimentée par la conduite d'air en dépression, dans une position de fermeture à une deuxième siège de soupape (23).

9. Dispositif preneur à aspiration selon la revendication 8,
**caractérisé** en ce que ledit deuxième ressort de soupape (22) comprend un arrangement au dedans d'une deuxième chambre de soupape (24) de ladite deuxième soupape de sûreté, qui est formée par un deuxième soufflet (25), et est disposé pour être mis en précontrainte en commun avec ledit deuxième élément de soupape (21) dudit deuxième soufflet (25) en sens inverse à la pression d'environnement qui agit de l'extérieur.

10. Dispositif preneur à aspiration selon la revendication 9,
**caractérisé** en ce que ledit deuxième soufflet (25) est disposé à une pièce intercalaire tubulaire (7) de la conduite d'air en dépression, qui comprend ladite deuxième siège de soupape (23) et est prévu d'une mortaise de guidage (27) parallèle à l'axe, pour un bras de guidage radial (26), dudit deuxième élément de soupape (21) en forme essentiellement sphérique, ledit bras de guidage (26), à la position de fermeture dudit deuxième élément de soupape (21), étant précontraint par ledit deuxième ressort de soupape (22) dans une position en contact avec ledit deuxième soufflet (25).
